# EUROPÄISCHE PATENTSCHRIFT

(11) **EP 2 522 865 B1**
(45) Veröffentlichungstag und Bekanntmachung des Hinweises auf die Patenterteilung: **20.08.2014**
(21) Anmeldenummer: 12003238.8
(22) Anmeldetag: 03.05.2012
(51) Int. Cl.: F16B 25/00, F16B 35/06

(54) **Senkkopfschraube**
Countersunk head screw
Boulon à tête fraisée

(30) Priorität: 12.05.2011 DE 202011100595 U
(43) Veröffentlichungstag der Anmeldung: 14.11.2012
(73) Patentinhaber: Berner Trading Holding GmbH, 74653 Künzelsau (DE)
(72) Erfinder: Runge, Erich, 74653 Künzelsau (DE)
(74) Vertreter: Prinz & Partner

(56) Entgegenhaltungen:
- WO-A1-2010/088647
- DE-A1- 3 344 048
- DE-U1- 8 513 794
- DE-U1- 9 106 746
- GB-A- 2 227 540
- GB-A- 2 336 415
- GB-A- 2 358 688
- JP-A- 59 131 013
- US-A- 1 151 861

## Beschreibung

Die Erfindung betrifft eine Senkkopfschraube, insbesondere eine selbstschneidende Senkkopfschraube für Holz und Kunststoff.

Es ist aus dem Stand der Technik bekannt, auf der Unterseite des Kopfes Fräsrippen und zwischen benachbarten Fräsrippen Frästaschen vorzusehen, damit sich der Kopf in die Unterlage aus Holz oder Kunststoff einfräsen kann und kein separates Ansenken erforderlich ist.

Die Erfindung ist insbesondere bei selbstschneidenden Holz- und Kunststoffschrauben vorteilhaft.

Solche Holz- oder Kunststoffschrauben mit Senkkopf werden auch zur Befestigung von Scharnieren oder anderen Beschlägen aus Metall verwendet, die oberflächenbeschichtet sind. Die vorgebohrten Öffnungen im Scharnier oder im Beschlag sind angesenkt, damit der Senkkopf darin verschwinden kann. Jedoch ist es dabei wichtig, dass trotz der Fräsrippen keine Beschädigung der Oberflächen des Scharniers oder Beschlags auftreten kann und die Fräsrippen nicht die zum Korrosionsschutz vorgesehene Beschichtung abkratzen.

Aus diesem Grund ist es bekannt, die Fräsrippen so auszubilden, dass ihre radiale Außenfläche, auch Anlagefläche genannt, in einer Kegelfläche liegt, das heißt Teil der Kegelfläche bildet. Damit liegt die Rippe vollflächig am Scharnier oder Beschlag an und kratzt die Oberflächenbeschichtung nicht ab.

Die US 1 151 861 A zeigt eine Senkkopfschraube, bei der in die kegelige Schraubenkopfunterseite Aussparungen und Nuten eingeschnitten sind. Durch diese eingeschnittenen Nuten sollen Schneidkanten erzeugt werden. Die Nuten gehen zum Schaft hin ineinander über, wobei die Schneidkanten geradlinig verlaufen.

Die JP 59-131013 A zeigt eine Senkkopfschraube, bei der die Unterseite ausschließlich aus schräg zueinander verlaufenden Flächen zusammengesetzt ist, um scharfkantige Schneidkanten zu bilden.

Die Senkkopfschraube nach der GP 2 358 688 A zeigt linear verlaufende, gezackte Schneidkanten und zwischen den Schneidkanten gewellt verlaufende Nuten.

Aufgabe der Erfindung ist es, eine Senkkopfschraube der eingangs genannten Art mit einem neuen Senkkopf zu versehen, der sich durch verbesserte Fräseigenschaften an seiner Unterseite auszeichnet.

Dies wird bei einer Senkkopfschraube nach Anspruch 1 gelöst.

Die erfindungsgemäße Senkkopfschraube hat Rippen, die nicht rein linear und nur axial zur Spitze hin verlaufen, sondern geschwungene, das heißt bogenförmig verlaufende Rippen und damit auch eine bogenförmig verlaufende Fräskante. Diese Fräskante schneidet wegen der schrägen Ausrichtung zur Drehrichtung leichter in den Untergrund ein. Das bedeutet, die Eindrehmomente können reduziert werden.

Der Begriff "in Seitenansicht" bedeutet, dass in Radialrichtung auf die der Blickrichtung zugewandten Rippen gesehen wird.

Vorzugsweise sollten alle Rippen die gleiche Gestalt haben, was die Herstellung erleichtert und für einen gleichmäßigen Verlauf beim Eindrehen sorgt.

Die Rippen können zumindest einen C-förmigen Abschnitt besitzen, vorzugsweise verlaufen sie "S"-förmig oder umgekehrt S-förmig vom Schaft zum Kopfende, wobei der Begriff "vom Schaft in Richtung Kopfende" auch umfasst, dass die Rippen mit einem Abstand vom Schaft beginnen und in einem Abstand vom Kopfende enden.

Insbesondere verläuft jede "S"-förmige Rippe oder umgekehrt S-förmige Rippe symmetrisch zur Axialrichtung.

Die Rippe hat darüber hinaus gemäß der bevorzugten Ausführungsform von ihrem kopfseitigen bis zu ihrem schaftseitigen Ende eine zunehmende, insbesondere kontinuierlich zunehmende Breite, die in Umfangsrichtung gemessen wird. Durch die zunehmende Breite wird auch die Breite der Frästasche zwischen benachbarten Rippen stetig deutlich kleiner.

Die Rippen sollten eine Breite > 0,5 mm haben und/oder können eine Breite bis zu etwa 25 % des Schaftdurchmessers besitzen. Bei einer Schraube mit Schaftdurchmesser 5 mm verdickt sich die Rippe somit bis zu etwa maximal 1,25 mm an ihrem schaftseitigen Ende.

In Seitenansicht gesehen erstreckt sich jede Rippe in einem axial verlaufenden Segment oder nimmt ein axial verlaufendes Segment in Anspruch, das eine Umfangsbreite von 35 bis 65 % des Schaftdurchmessers aufweist. Diese Gesamtbreite des "S" stellt eine große Anlagefläche bei Verwendung zur Befestigung eines Scharniers oder Beschlags sicher.

Die erfindungsgemäße Senkkopfschraube hat vorzugsweise keine rein linear verlaufenden Abschnitte, sondern ausschließlich geschwungene Abschnitte, in Seitenansicht bzw. Radialansicht gesehen. Damit wird das leichte Einschrauben des Schraubkopfes sichergestellt.

Die Schabkante sollte, in Radialschnittansicht gesehen, durch die Rippenanlagefläche und die sich mit ihr unter 80 bis 100° schneidende, in Drehrichtung weisende Seitenfläche gebildet werden. Dieser Winkelbereich stellt eine ausreichende Stabilität der Fräskante sicher.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Seitenansicht einer ersten Ausführungsform der erfindungsgemäßen Senkkopfschraube,
- Figur 2 eine vergrößerte Ansicht des Senkkopfs der Schraube nach Figur 1,
- Figur 3 eine Schnittansicht längs der Linie lll-lll in Figur 1, und
- Figur 4 eine Seitenansicht des Kopfes mit andersherum geschwungenen Rippen.

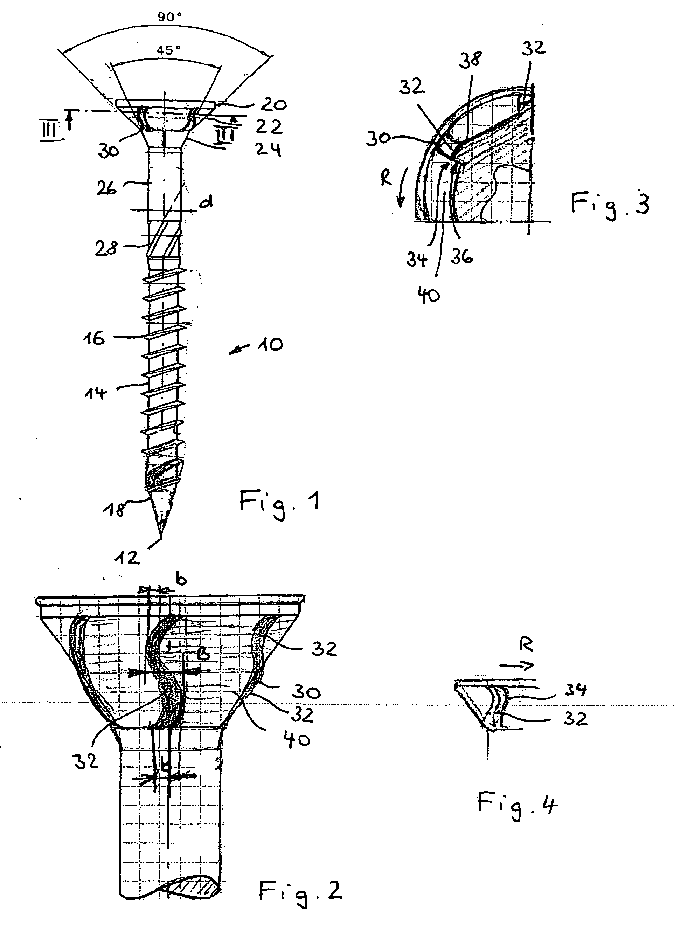

In Figur 1 ist eine Senkkopfschraube 10 gezeigt, die zum Eindrehen in Holz oder Kunststoff ausgeführt ist. Die Schraube hat eine Spitze 12, einen Schaft 14 mit einem selbstschneidenden Gewinde 16 und einen die Spitze 12 und den Schaft 14 verbindenden, kegelig zulaufenden Spitzenbereich 18.

Die Schraube 10 besitzt einen Senkkopf 20, der in der dargestellten Ausführungsform einen oberen Abschnitt 22 mit einem Kegelwinkel von 90° und einen unteren Abschnitt 24 mit einem Kegelwinkel von 45° aufweist.

Zu betonen ist, dass die Erfindung nicht auf Senkkopfschrauben mit zwei Kegelabschnitten 22, 24 beschränkt ist.

Ein gewindeloser Abschnitt 26 grenzt an einen Schabeabschnitt 28 an, der unmittelbar an den Bereich mit dem Gewinde 16 anschließt.

Der Durchmesser des Schaftes d wird an dem gewindelosen Abschnitt 26 gemessen.

Im Bereich des oberen kegeligen Abschnitts 22 stehen mehrere gleichmäßig am Umfang des Abschnitts 22 verteilte Rippen 30 nach außen vor. Bevorzugt sind vier oder sechs Rippen vorhanden. Diese Rippen haben alle die gleiche Gestalt und besitzen mehrere C-förmige Abschnitte, im gezeigten Ausführungsbeispiel zwei C-förmige Abschnitte, die zu einer "S"-Form zusammengesetzt sind.

Die S-förmigen Rippen 30 können auch umgekehrt S-förmig verlaufen, wie in Figur 4 dargestellt, indem sie die Form eines Fragezeichens besitzen.

Die abstehenden Rippen 30 haben eine radial äußere Anlagefläche 32, welche radial nach außen weist und welche in einer Kegelfläche liegt. Alle Anlageflächen 32 der Rippen 30 liegen in derselben Kegelfläche. Diese Kegelfläche hat auch denselben zuvor bereits genannten Kegelwinkel des Abschnitts 22.

In Seitenansicht gemäß Figur 2 ist zu sehen, dass die Rippen 30 von ihrem kopfseitigen Ende bis zu ihrem schaftseitigen Ende eine zunehmende, insbesondere kontinuierlich zunehmende Breite b (in Umfangsrichtung gemessen) haben.

An ihrem kopfseitigen Ende haben die Rippen 30 eine Breite von etwa 0,5 mm oder etwas größer, wogegen sie am schaftseitigen Ende eine Breite b besitzen, die bis etwa 25 % des Schaftdurchmessers d betragen kann. Bei der dargestellten Schraube, bei der es sich um eine Schraube mit einem Schaftdurchmesser von 5 mm handelt, endet ihre Rippe 30 mit einer Breite von etwa 1 bis 1,25 mm. Die Breite b ist auch die Breite der Anlagefläche 32.

Das "S" ist so breit geschwungen, dass es ein Segment mit einer Umfangsbreite B (siehe Figur 2) ausfüllt, wobei die Umfangsbreite B 35 bis 65 % des Schaftdurchmessers d beträgt. Im dargestellten Ausführungsbeispiel sind dies etwa 2 mm.

Wie man sämtlichen Figuren entnehmen kann, verlaufen die Rippen 30 ausschließlich geschwungen, das heißt sie haben keinen linearen Abschnitt.

In Eindrehrichtung R (siehe Figuren 3 und 4) bilden die Rippen Fräskanten 34 aus. Diese Fräskanten 34 verlaufen dementsprechend ebenfalls S-förmig und bilden einen seitlichen Abschluss der Anlageflächen 32. Die Fräskanten 34 ergeben sich aus der Schnittlinie zwischen den Anlageflächen 32 und einer in Drehrichtung R weisenden Seitenfläche 36 der Rippe (siehe Figur 3).

Die Anlagefläche 32 schneidet die Seitenfläche 36 in einem Winkel von 80 bis 100°.

Die zur Seitenfläche 36 entgegengesetzte Seitenfläche 38 jeder Rippe 30 ist relativ flach zur Anlagefläche 32 geneigt.

Zwischen benachbarten Rippen 30 ergeben sich sogenannte Frästaschen 40, die das Bohrmehl aufnehmen.

Die Höhe der Rippen 30, vorzugsweise in Radialrichtung an den jeweiligen Seitenflächen 36 gemessen, beträgt etwa 0,5 bis 1 mm, abhängig vom Schaftdurchmesser d.

## Patentansprüche

1. Senkkopfschraube, mit einem Kopf (20), einer Spitze (12) und einem Schaft (14) mit Gewinde (16), wobei der Kopf (20) einen kegeligen, der Spitze (12) zugewandten Abschnitt (22) mit mehreren umfangsmäßig verteilten, radial nach außen abstehenden Rippen (30) aufweist, die, gesehen in Radialrichtung auf die der Blickrichtung zugewandten Rippen, geschwungen vom Schaft (14) in Richtung Kopfende verlaufen, wobei die Rippen (30) radiale Anlageflächen (32) haben, die in einer Kegelfläche liegen und randseitig in Eindrehrichtung eine bogenförmig verlaufende Fräskante (34) ausbilden.

2. Senkkopfschraube nach Anspruch 1, **dadurch gekennzeichnet, dass** alle Rippen (30) die gleiche Gestalt haben.

3. Senkkopfschraube nach Anspruch 1 oder 2, **dadurch gekennzeichnet, dass** die Rippen (30) zumindest einen C-förmigen Abschnitt besitzen.

4. Senkkopfschraube nach einem der vorhergehenden Ansprüche, **dadurch gekennzeichnet, dass** die Rippen (30) "S"- oder umgekehrt "S"-förmig verlaufen.

5. Senkkopfschraube nach einem der vorhergehenden Ansprüche, **dadurch gekennzeichnet, dass** die Rippen (30) vom kopfseitigen bis zum schaftseitigen Ende eine zunehmende, insbesondere kontinuierlich zunehmende Breite (b) haben.

6. Senkkopfschraube nach einem der vorhergehenden Ansprüche, **dadurch gekennzeichnet, dass** die Rippen (30) eine Breite (b) von mindestens 0,5 mm haben.

7. Senkkopfschraube nach einem der vorhergehenden Ansprüche, **dadurch gekennzeichnet, dass** die Rippen (30) eine Breite (b) haben, die bis zu etwa 25 % des Schaftdurchmessers beträgt.

8. Senkkopfschraube nach einem der vorhergehenden Ansprüche, **dadurch gekennzeichnet, dass** sich, in Seitenansicht gesehen, jede Rippe (30) jeweils in einem axial verlaufenden Segment erstreckt, das eine Umfangsbreite von 35 bis 65 % des Schaftdurchmessers hat.

9. Senkkopfschraube nach einem der vorhergehenden Ansprüche, **dadurch gekennzeichnet, dass** die Rippen (30) ausschließlich geschwungene Abschnitte, in Seitenansicht gesehen, aufweisen.

10. Senkkopfschraube nach einem der vorhergehenden Ansprüche, **dadurch gekennzeichnet, dass** jede Rippe (30) eine entgegengesetzt zur Eindrehrichtung (R) verlaufende Seitenfläche (38) besitzt, welche im Radialschnitt gesehen flacher verläuft als die entgegengesetzte, die Fräskante (34) mitdefinierende Seitenfläche (36).

11. Senkkopfschraube nach einem der vorhergehenden Ansprüche, **dadurch gekennzeichnet, dass** die Fräskante (34) in Radialschnittansicht gesehen durch eine Schnittlinie der Anlagefläche (32) und der in Drehrichtung weisenden Seitenfläche (36) der entsprechenden Rippe (30) gebildet ist, die einander unter 80 bis 100° schneiden.

## Claims

1. A countersunk head screw comprising a head (20), a tip (12), and a shank (14) having a thread (16), the head (20) including a conical portion (22) which faces the tip (12) and has a plurality of circumferentially distributed ribs (30) protruding radially outwards which, as seen in the radial direction towards the ribs facing the viewing direction, extend in a curved manner from the shank (14) towards the head end, the ribs (30) having radial contact surfaces (32) which lie in a conical surface and form an arcuately extending milling edge (34) on the border side in the screw-in direction.

2. The countersunk head screw according to claim 1, **characterized in that** all ribs (30) have the same shape.

3. The countersunk head screw according to claim 1 or 2, **characterized in that** the ribs (30) include at least one C-shaped portion.

4. The countersunk head screw according to any of the preceding claims, **characterized in that** the ribs (30) extend in an "S" shape or in an inverted "S" shape.

5. The countersunk head screw according to any of the preceding claims, **characterized in that** the ribs (30) have an increasing, in particular a continuously increasing width (b) from the end on the head side to the end on the shank side.

6. The countersunk head screw according to any of the preceding claims, **characterized in that** the ribs (30) have a width (b) of at least 0.5 mm.

7. The countersunk head screw according to any of the preceding claims, **characterized in that** the ribs (30) have a width (b) which amounts to up to about 25 % of the shank diameter.

8. The countersunk head screw according to any of the preceding claims, **characterized in that** each rib (30), as seen in a side view, extends in a respective axially extending segment which has a circumferential width of 35 to 65 % of the shank diameter.

9. The countersunk head screw according to any of the preceding claims, **characterized in that** the ribs (30) exclusively have curved portions, as seen in a side view.

10. The countersunk head screw according to any of the preceding claims, **characterized in that** each rib (30) has a side surface (38) which extends oppositely to the screw-in direction (R) and which, as seen in a radial section, extends more flatly than the opposite side surface (36) co-defining the milling edge (34).

11. The countersunk head screw according to any of the preceding claims, **characterized in that** as seen in a radial sectional view, the milling edge (34) is formed by a line of intersection of the contact surface (32) and the side surface (36), pointing in the direction of rotation, of the corresponding rib (30), which intersect each other at 80 to 100 degrees.

## Revendications

1. Vis à tête fraisée, comportant une tête (20), une pointe (12) et une tige (14) avec un filet (16), la tête (20) comportant un tronçon (22) conique tourné vers la pointe (12) et présentant plusieurs nervures (30) réparties sur la périphérie, lesquelles font saillie radialement vers l'extérieur et qui, vues dans le sens radial sur les nervures tournées vers la direction du regard, s'étendent de manière courbe depuis la tige (14) en direction du bout de tête, les nervures (30) présentant des surfaces d'appui radiales (32) qui se trouvent dans une surface de cône et forment du côté des bords dans le sens de vissage une arête de fraisage (34) qui s'étend de manière arquée.

2. Vis à tête fraisée selon la revendication 1, **caractérisée en ce que** toutes les nervures (30) ont la même forme.

3. Vis à tête fraisée selon la revendication 1 ou 2, **caractérisée en ce que** les nervures (30) comportent au moins un tronçon en forme de C.

4. Vis à tête fraisée selon l'une des revendications précédentes, **caractérisée en ce que** les nervures (30) s'étendent en forme de « S » ou de « S » inversée.

5. Vis à tête fraisée selon l'une des revendications précédentes, **caractérisée en ce que** les nervures (30) présentent depuis l'extrémité côté tête vers l'extrémité côté tige une largeur (b) croissante, en particulier croissante de manière continue.

6. Vis à tête fraisée selon l'une des revendications précédentes, **caractérisée en ce que** les nervures (30) présentent une largeur (b) d'au moins 0,5 mm.

7. Vis à tête fraisée selon l'une des revendications précédentes, **caractérisée en ce que** les nervures (30) présentent une largeur (b) correspondant jusqu'à environ 25 % du diamètre de la tige.

8. Vis à tête fraisée selon l'une des revendications précédentes, **caractérisée en ce que** vue selon une vue latérale, chaque nervure (30) s'étend respectivement dans un segment s'étendant de manière axiale lequel présente une largeur périphérique de 35 à 60 % du diamètre de la tige.

9. Vis à tête fraisée selon l'une des revendications précédentes, **caractérisée en ce que** vues selon une vue latérale, les nervures (30) ne présentent que des tronçons courbes.

10. Vis à tête fraisée selon l'une des revendications précédentes, **caractérisée en ce que** chaque nervure (30) présente une face latérale (38) qui s'étend de manière opposée au sens de vissage (R) et qui vue dans une coupe radiale, s'étend de manière plus plate que la face latérale (36) opposée définissant également l'arête de fraisage (34).

11. Vis à tête fraisée selon l'une des revendications précédentes, **caractérisée en ce que** vue dans une coupe radiale, l'arête de fraisage (34) est formée par une ligne d'intersection de la surface d'appui (32) et de la face latérale (36) de la nervure correspondante (30), dirigée dans le sens de rotation, lesquelles se coupent sous un angle de 80 à 100°.
